(19) **Europäisches Patentamt / European Patent Office / Office européen des brevets**

(11)　**EP 4 610 936 A1**

(12)　## EUROPEAN PATENT APPLICATION

(43) Date of publication:
 **03.09.2025　Bulletin 2025/36**

(21) Application number: **24160622.7**

(22) Date of filing: **29.02.2024**

(51) International Patent Classification (IPC):
 *G06V 10/25* (2022.01)　　　*G06V 10/98* (2022.01)
 *G06V 20/56* (2022.01)

(52) Cooperative Patent Classification (CPC):
 **G06V 10/993; G06V 10/25; G06V 20/56**

(84) Designated Contracting States:
 **AL AT BE BG CH CY CZ DE DK EE ES FI FR GB GR HR HU IE IS IT LI LT LU LV MC ME MK MT NL NO PL PT RO RS SE SI SK SM TR**
 Designated Extension States:
 **BA**
 Designated Validation States:
 **GE KH MA MD TN**

(71) Applicant: **Robert Bosch GmbH**
 **70442 Stuttgart (DE)**

(72) Inventors:
 • **Sakmann, Kaspar**
  **70469 Stuttgart (DE)**
 • **Timans, Alexander**
  **1017 GP Amsterdam (NL)**
 • **Nalisnick, Eric**
  **1086 ZR Amsterdam (NL)**
 • **Straehle, Christoph-Nikolas**
  **71263 Weil Der Stadt (DE)**

Remarks:
 Amended claims in accordance with Rule 137(2) EPC.

(54)　**A DEVICE, A DATASTRUCTURE, A METHOD FOR DETERMINING A PREDICTION INTERVAL FOR A COORDINATE OF A BOUNDING BOX, IN PARTICULAR FOR CHECKING WHETHER AN OBJECT DETECTOR OPERATES SAFELY OR NOT, PREFERABLY FOR OPERATING AN IN PARTICULAR AUTONOMOUS VEHICLE**

(57)　A device, a data structure, and a method for determining a prediction interval for a coordinate of a bounding box, in particular for checking whether an object detector operates safely or not, preferably for operating an in particular autonomous vehicle, wherein the method comprises providing (202) calibration data and a test sample, wherein the calibration data comprises digital images that are associated with a respective ground truth bounding box coordinate and class label, wherein the test sample comprises a digital image, determining (204), in particular with the object detector, a predicted box coordinate for the box coordinate depending on the digital image of the test sample, determining (206), depending on the calibration data, conformal label quantiles for the respective classes and conformal box coordinate quantiles for the respective box coordinates, selecting (210), depending on the conformal label quantiles, a conformal box coordinate quantile for the box coordinate from the conformal box coordinate quantiles for the box coordinate, determining (212) the conformal box coordinate prediction interval for the box coordinate depending on the conformal box quantile for the box coordinate.

**Fig. 2**

EP 4 610 936 A1

**Description**

Background

The invention relates to a device, a datastructure, and a method for determining a prediction interval for a coordinate of a bounding box, in particular for checking whether an object detector operates safely or not, preferably for operating an in particular autonomous vehicle.

Disclosure of the invention

A device, a datastructure and a method according to the independent claims provide a prediction interval with a guarantee for the correctness of the bounding box coordinate within the prediction interval.

The method for determining a prediction interval for a coordinate of a bounding box, in particular for checking whether an object detector operates safely or not, preferably for operating an in particular autonomous vehicle, comprises providing calibration data and a test sample, wherein the calibration data comprises digital images that are associated with a respective ground truth bounding box coordinate and class label, wherein the test sample comprises a digital image, determining, in particular with the object detector, a predicted box coordinate for the box coordinate depending on the digital image of the test sample, determining, depending on the calibration data, conformal label quantiles for the respective classes and conformal box coordinate quantiles for the respective box coordinates, selecting, depending on the conformal label quantiles, a conformal box coordinate quantile for the box coordinate from the conformal box coordinate quantiles for the box coordinate, determining the conformal box coordinate prediction interval for the box coordinate depending on the conformal box quantile for the box coordinate.

Selecting the conformal box coordinate quantile for the box coordinate may comprise determining a conformal label set depending on the conformal label quantiles, wherein the conformal label set comprises a subset of class labels of the calibration data, and selecting the largest of the conformal box coordinate quantiles over the classes in the conformal label set as the box coordinate quantile for the box coordinate. This conformal method works independent of any classes that the object detector may assign.

For a class specific prediction interval, the calibration data comprises the digital images associated with a respective class of a set of classes, wherein the test sample comprises the digital image in particular associated with a class of the set of classes, wherein the method comprises determining, in particular with the object detector, a predicted class for the predicted box coordinate, wherein selecting the conformal box coordinate quantile for the box coordinate comprises determining, depending on the calibration data, for the classes in the set of classes a respective conformal box coordinate quantile that is associated with the respective class, determining, depending on the calibration data, a conformal label set comprising a subset of the classes, and selecting the largest of the conformal box coordinate quantiles that is associated to a class in the subset as the conformal box coordinate quantile for the box coordinate. This conformal method works best when the object detector comprises a calibrated classifier for the classes.

Determining the conformal label set comprising the subset of the classes may comprise determining predicted class labels that are associated with a respective probability that the respective predicted class label labels correctly, determining for the classes in the set of classes, in particular with a probabilistic classifier and a scoring function for the class, a respective conformal label quantile depending on the digital images of the calibration data, and selecting the subset in descending probability order from the predicted class labels such that a coverage according to the conformal label quantile is achieved. This means that the conformal box coordinate quantiles of the classes that are more likely the correct class than other classes are used to determine the prediction interval.

The method may comprise determining that the object detector operates unsafely when the predicted coordinate is outside of the prediction interval.

The method may comprise determining, in particular with the object detector, the predicted coordinates of the bounding box, determining the prediction interval for the respective predicted coordinates, and determining that the object detector operates safely when the predicted coordinates are within the prediction interval, or determining that the object detector operates unsafely when the predicted coordinates are outside of the prediction interval.

The prediction interval can be used to for example safely operate autonomous vehicles.

The method may comprise operating an in particular autonomous vehicle depending on the bounding box coordinate, when it is detected that the object detector operates safely, and otherwise not operating an in particular autonomous vehicle depending on the bounding box coordinate.

According to a use case, the vehicle has to plan a trajectory around other traffic participants. The prediction interval for the bounding box coordinate allows to plan with a bounding box having a statistical guaranty on the size and position of an object, e.g., another traffic participants, in the bounding box. The vehicle for example ignores bounding box coordinates for that an unsafe operation of the object detector is detected. The vehicle for example uses bounding box coordinates for that a safe operation of the object detector is detected. Thus the vehicle plans a safer trajectory.

The method may comprise operating an in particular autonomous vehicle depending on the bounding box coordinate or depending on the predicted class, when it is detected that the object detector operates safely, and otherwise not operating an in particular autonomous vehicle depending on the bounding box coordinate or depending on the predicted class.

This means, the class specific prediction interval is used for operating the vehicle.

The device for determining a prediction interval for a coordinate of a bounding box, in particular for checking whether an object detector operates safely or not, preferably for operating an in particular autonomous vehicle, wherein the device comprises at least one processor and at least one memory, wherein the at least one memory is configured to store instructions that, when executed by the at least one processor cause the device to execute the method.

A computer program may be provided, wherein the computer program comprises computer readable instructions that, when executed by a computer, cause the computer to execute the method.

The data structure, in particular a computer implemented data structure, comprises at least one data field for calibration data, and for a test sample, wherein the calibration data comprises digital images associated with a respective ground truth bounding box coordinate and class label, wherein the test sample comprises a digital image, wherein the data structure comprises at least one data field for a predicted box coordinate, for conformal label quantiles for the respective classes and conformal box coordinate quantiles for the respective box coordinates, for a conformal box coordinate quantile selected from the conformal box coordinate quantiles depending on the conformal label quantiles, and for a conformal box coordinate prediction interval.

The data structure may comprise at least one data field for a class associated with a respective digital image of the calibration data, preferably at least one data field for a class associated with the digital image of the test sample, at least one data field for a predicted class for the predicted box coordinate, for a conformal box coordinate quantile that is associated with a respective class of the set of classes, and for a conformal label set comprising a subset of the classes.

Further advantageous embodiments are derived from the following description and the drawing. In the drawing:

Fig. 1 depicts a device for determining a prediction interval for a coordinate of a bounding box, in particular for checking whether an object detector operates safely or not, preferably for operating an in particular autonomous vehicle,

Fig. 2 depicts a flowchart with steps of a method for determining the prediction interval for the coordinate of the bounding box, in particular for checking whether the object detector operates safely or not, preferably for operating the in particular autonomous vehicle,

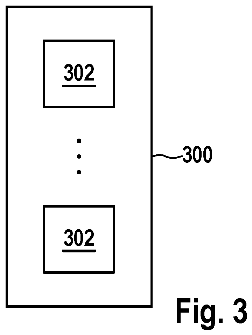

Fig. 3 schematically depicts a data structure.

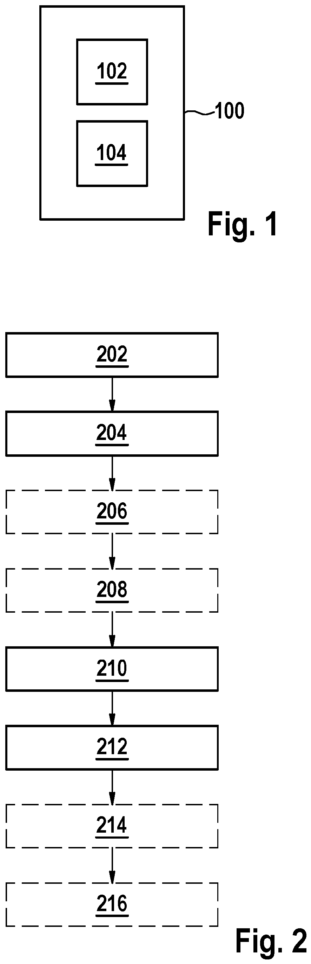

Figure 1 schematically depicts a device 100 for determining a prediction interval for a coordinate of a bounding box.

The device may be configured for checking whether an object detector operates safely or not.

The device may be configured for checking whether an object detector operates safely or not for operating an in particular autonomous vehicle.

The autonomous vehicle may comprise the device 100.

The device 100 may be configured for operating the autonomous vehicle.

According to a use case, the device 100 is configured to plan a trajectory of the vehicle around other traffic participants. According to a use case, the device 100 is configured to output instructions for actuators of the vehicle, e.g., an engine and/or a steering system and/or a brake system of the vehicle, in order to drive the vehicle along the trajectory.

The object detector may be configured to output multiple bounding boxes comprising the other traffic participant. The device 100 may be configured to plan the trajectory depending on the bounding box. The object detector may be configured to output a class for the bounding box that labels the class of the other traffic participant. The device 100 may be configured to plan the trajectory depending on the class.

The device 100 comprises at least one processor 102 and at least one memory 104.

The at least one memory 104 is configured to store instructions that, when executed by the at least one processor 102 cause the device 100 to execute a method for determining a prediction interval for a coordinate of a bounding box.

The method may be a method for determining the prediction interval for the coordinate of a bounding box for checking whether an object detector $\hat{f}$ operates safely or not.

The method may be a method for checking whether the object detector $\hat{f}$ operates safely or not for operating the in particular autonomous vehicle.

Figure 2 depicts a flow chart with steps of the method.

The method comprises a step 200.

The step 200 comprises providing labels $l \in \{1, \ldots K\}$ representing object's class labels of a set of classes $\mathcal{Y}$.

The method comprises a step 202.

The step 202 comprises providing calibration data $D_{cal} = \{X_i, Y_i\}_{i=1}^n \sim P_{XY}$ associated with the respective ground truth bounding box coordinates and an unseen test sample $(X_{n+1}, Y_{n+1})$, wherein $X \in \mathbb{R}^{H \times W \times D}$ denotes a digital image, where H is the height, W is the width, and D is the channel depth of the digital image, wherein Y denotes the ground truth bounding boxes coordinates and their classes.

The method comprises a step 204.

The step 204 comprises determining box coordinates $\hat{c}_{n+1}^k$ and a predicted class label $\hat{l}_{n+1}$ for the bounding box coordinates $\hat{c}_{n+1}^k$ depending on the digital image $X_{n+1}$ of the unseen test sample $(X_{n+1}, Y_{n+1})$, in particular with an object detector $\hat{f}(X_{n+1})$

$$\left(\hat{c}_{n+1}^k, \hat{l}_{n+1}\right) = \hat{f}(X_{n+1})$$

For a bounding box that is defined by m coordinates $k = 1, \ldots m$, the object detector $\hat{f}(X_{n+1})$ is for example configured to output a mean coordinate prediction $\hat{c}_{n+1}^k$ for the $k$-th coordinate of the bounding box.

The predicted class label $\hat{l}_{n+1}$ is a prediction of the object detector $\hat{f}$ for the object's class labels $l \in \{1, \ldots K\}$.

The step 204 may comprise determining, in particular with the object detector $\hat{f}(X_{n+1})$, the predicted coordinates $\hat{c}_{n+1}^k$, $k = 1, \ldots m$, of the bounding box in the digital image $X_{n+1}$ of the test sample.

The method comprises a step 206.

The step 206 comprises determining conformal label quantiles $\hat{q}_L^y$ for the classes $y \in \mathcal{Y}$ and conformal box coordinate quantiles $\hat{q}_B^{k,y}$ for the k coordinates $k = 1, \ldots, m$ and the classes $y \in \mathcal{Y}$ depending on the calibration data $D_{cal}$. $\hat{q}_B^{k,y}$ denotes the quantile of the $k$-th coordinate for class $y$.

According to an example, the respective per-class conformal label quantile $\hat{q}_L^y$ is determined with a probabilistic classifier $\hat{f}_L(X)$ and a scoring function $s(\hat{f}_L(X), y) = 1 - \hat{\pi}_y(x)$ for the class $y \in \mathcal{Y}$ depending on the digital image $X$, wherein $\hat{\pi}_y(x)$ denotes the probability that a digital image $x$ is correctly classified in class $y$.

The method optionally comprises a step 208.

The optional step 208 comprises determining a conformal label set $\hat{C}_L(X_{n+1})$ depending on the conformal label quantiles $\hat{q}_L^y$ for the classes $y \in \mathcal{Y}$ :

$$\hat{C}_L(X_{n+1}) = \left\{y \in \mathcal{Y} : \hat{\pi}_y(X_{n+1}) \geq 1 - \hat{q}_L^y\right\}$$

The conformal label set $\hat{C}_L(X_{n+1})$ comprises a subset of the classes. The subset is selected in descending probability order from the predicted class labels such that a coverage according to the conformal label quantile $\hat{q}_L^y$ is achieved.

Assuming that the predicted class labels consist of the highest probability class for every sample, i.e.,

$$\hat{C}_L(X_{n+1}) = \left\{y^* : \hat{\pi}_{y^*}(X_{n+1}) = \max_{y \in \{1,..,k\}} \hat{\pi}_y(X_{n+1})\right\}$$

, singleton sets $\hat{C}_L(X_{n+1})$ are determined that come without nominal guarantees. This means the empirical coverage performance relies fully on the classifier's accuracy.

Assuming that the probabilistic classifier $\hat{f}_L(X)$ may be calibrated, such that $\hat{\pi}_y(x) = \pi_y(x) \forall y \in \mathcal{Y}$, $\pi_y(x)$ may be sorted in descending order until the probability mass $1 - \alpha_L$ is reached, wherein $\alpha_L$ is a parameter set e.g. to achieve 90% coverage or any other coverage that is desired.

The method comprises a step 210.

The step 210 comprises selecting a conformal box quantile $\hat{q}_B^k$ for the *k*-th coordinate depending on the conformal label quantiles $\hat{q}_L^y$.

The step 210 may comprise selecting the largest of the conformal box coordinate quantiles $\hat{q}_B^{k, y \in \hat{C}_L(X_{n+1})}$ over the classes y $\in$ $\mathcal{Y}$ in the conformal label set $\hat{C}_L(X_{n+1})$:

$$\hat{q}_B^k = \max\left\{\hat{q}_B^{k,y}\right\}_{y \in \hat{C}_L(X_{n+1}) \forall k \in \{1, \ldots, m\}}$$

The conformal label set $\hat{C}_L(X_{n+1})$ depends on the conformal label quantiles $\hat{q}_L^y$.

The method comprises a step 212.

The step 212 comprises determining a conformal box coordinate prediction interval for the *k*-th coordinate

$$\hat{C}_B^k(X_{n+1}) = \left[\hat{c}_{n+1}^k - \hat{q}_B^k, \hat{c}_{n+1}^k + \hat{q}_B^k\right], k = 1, \ldots, m$$

depending on the conformal box quantile $\hat{q}_B^k$ for the *k*-th coordinate.

The step 212 may comprise determining the prediction interval for the respective predicted coordinates.

The method may, in particular for checking whether an object detector $\hat{f}(X_{n+1})$ operates safely or not, comprise a step 214.

The step 214 comprises for example determining that the object detector $\hat{f}(X_{n+1})$ operates unsafely when the predicted coordinate is outside of the prediction interval.

The step 214 may comprise determining that the object detector $\hat{f}$ operates safely when the predicted coordinates are within the prediction interval.

The step 214 may comprise determining that the object detector $\hat{f}$ operates unsafely when the predicted coordinates are outside of the prediction interval.

The step 214 may comprise ignoring the bounding box coordinate or the bounding box coordinates for that an unsafe operation of the object detector $\hat{f}$ is detected.

The method may comprise a step 216.

The step 216 may comprise operating the vehicle depending on the bounding box coordinates, when it is detected that the object detector $\hat{f}$ operates safely, and otherwise not operating an in particular autonomous vehicle depending on the bounding box coordinates.

The step 216 may comprise operating the vehicle depending on the predicted classes, when it is detected that the object detector $\hat{f}$ operates safely, and otherwise not operating an in particular autonomous vehicle depending on the bounding box coordinate or depending on the predicted class.

The step 216 for example comprises using the bounding box coordinates for that a safe operation of the object detector $\hat{f}$ is detected to plan the trajectory.

The step 216 for example comprises operating the vehicle depending on the predicted classes, when it is detected that the object detector $\hat{f}$ operates safely, and otherwise not operating the vehicle depending on the predicted class.

The step 216 for example comprises using the predicted class for that a safe operation of the object detector $\hat{f}$ is detected to plan the trajectory.

The object's class labels $l \in \{1, \ldots K\}$ and the predicted label $\hat{l}_{n+1}$ for example indicate that an object is either to be avoided by the trajectory or can be driven over. The trajectory is for example planned to avoid the object in the bounding box identified by the predicted coordinates when the predicted class indicates that the object is to be avoided. The trajectory is for example planned to drive over the object in the bounding box identified by the predicted coordinates when the predicted class indicates that the object can be driven over.

**Claims**

1. A method for determining a prediction interval for a coordinate of a bounding box, in particular for checking whether an object detector operates safely or not, preferably for operating an in particular autonomous vehicle, **characterized in that** the method comprises providing (202) calibration data and a test sample, wherein the calibration data comprises digital images that are associated with a respective ground truth bounding box coordinate and class label, wherein the test sample comprises a digital image, determining (204), in particular with the object detector, a predicted box coordinate for the box coordinate depending on the digital image of the test sample, determining (206), depending on the calibration data, conformal label quantiles for the respective classes and conformal box coordinate quantiles for the respective box coordinates, selecting (210), depending on the conformal label quantiles, a conformal box coordinate quantile for the box coordinate from the conformal box coordinate quantiles for the box coordinate, determining (212) the conformal box coordinate prediction interval for the box coordinate depending on the conformal box quantile for the box coordinate.

2. The method according to claim 1, **characterized in that** selecting (210) the conformal box coordinate quantile for the box coordinate comprises determining a conformal label set depending on the conformal label quantiles, wherein the conformal label set comprises a subset of class labels of the calibration data, and selecting the largest of the conformal box coordinate quantiles over the classes in the conformal label set as the box coordinate quantile for the box coordinate.

3. The method according to claim 1 or 2, **characterized in that** the calibration data comprises the digital images associated with a respective class of a set of classes, wherein the test sample comprises the digital image in particular associated with a class of the set of classes, wherein the method comprises determining, in particular with the object detector, a predicted class for the predicted box coordinate, wherein selecting (210) the conformal box coordinate quantile for the box coordinate comprises determining, depending on the calibration data, for the classes in the set of classes a respective conformal box coordinate quantile that is associated with the respective class, determining, depending on the calibration data, a conformal label set comprising a subset of the classes, and selecting the largest of the conformal box coordinate quantiles that is associated to a class in the subset as the conformal box coordinate quantile for the box coordinate. The method according to claim 3, **characterized in that** determining the conformal label set comprising the subset of the classes comprises determining predicted class labels that are associated with a respective probability that the respective predicted class label labels correctly, determining for the classes in the set of classes, in particular with a probabilistic classifier and a scoring function for the class, a respective conformal label quantile depending on the digital images of the calibration data, and selecting the subset in descending probability order from the predicted class labels such that a coverage according to the conformal label quantile is achieved.

4. The method according to one of the preceding claims, **characterized in that** the method comprises determining (214) that the object detector operates unsafely when the predicted coordinate is outside of the prediction interval.

5. The method according to one of the preceding claims, **characterized in that** the method comprises determining (204), in particular with the object detector, the predicted coordinates of the bounding box, determining (212) the prediction interval for the respective predicted coordinates, and determining (214) that the object detector operates safely when the predicted coordinates are within the prediction interval, or determining that the object detector operates unsafely when the predicted coordinates are outside of the prediction interval.

6. The method according to one of the preceding claims, **characterized in that** the method comprises operating (216) an in particular autonomous vehicle depending on the bounding box coordinate, when it is detected that the object detector operates safely, and otherwise not operating an in particular autonomous vehicle depending on the bounding box coordinate.

7. The method according to one of the claims 1 to 6, **characterized in that** the method comprises operating (216) an in particular autonomous vehicle depending on the bounding box coordinate or depending on the predicted class, when it is detected that the object detector operates safely, and otherwise not operating an in particular autonomous vehicle depending on the bounding box coordinate or depending on the predicted class.

8. A device (100) for determining a prediction interval for a coordinate of a bounding box, in particular for checking whether an object detector operates safely or not, preferably for operating an in particular autonomous vehicle, **characterized in that** the device (100) comprises at least one processor (102) and at least one memory (104), wherein the at least one memory (104) is configured to store instructions that, when executed by the at least one processor (102) cause the device (100) to execute the method according to one of the claims 1 to 7.

9. A computer program, **characterized in that** the computer program comprises computer readable instructions that, when executed by a computer, cause the computer to execute the method according to one of the claims 1 to 7.

10. A data structure (300), in particular a computer implemented data structure, **characterized in that** the data structure (300) comprises at least one data field (302) for calibration data, and for a test sample, wherein the calibration data comprises digital images that are associated with a respective ground truth bounding box coordinate and class label, wherein the test sample comprises a digital image, wherein the data structure comprises at least one data field (302) for a predicted box coordinate, for conformal label quantiles for the respective classes and conformal box coordinate quantiles for the respective box coordinates, for a conformal box coordinate quantile selected from the conformal box coordinate quantiles depending on the conformal label quantiles, and for a conformal box coordinate prediction interval.

11. The data structure (300) according to claim 10, comprises at least one data field (302) for a class associated with a respective digital image of the calibration data, preferably at least one data field (302) for a class associated with the digital image of the test sample, at least one data field (302) for a predicted class for the predicted box coordinate, for a conformal box coordinate quantile that is associated with a respective class of the set of classes, and for a conformal label set comprising a subset of the classes.

**Amended claims in accordance with Rule 137(2) EPC.**

1. A method for determining a prediction interval for a coordinate of a bounding box, in particular for checking whether an object detector operates safely or not, preferably for operating an in particular autonomous vehicle, wherein the method comprises providing (202) calibration data and a test sample, wherein the calibration data comprises digital images that are associated with a respective ground truth bounding box coordinate and class label, wherein the test sample comprises a digital image, determining (204), in particular with the object detector, a predicted box coordinate for the box coordinate depending on the digital image of the test sample, **characterized by** determining (206), depending on the calibration data, conformal label quantiles for the respective classes and conformal box coordinate quantiles for the respective box coordinates, selecting (210), depending on the conformal label quantiles, a conformal box coordinate quantile for the box coordinate from the conformal box coordinate quantiles for the box coordinate, determining (212) the conformal box coordinate prediction interval for the box coordinate depending on the conformal box quantile for the box coordinate, and

   in that selecting (210) the conformal box coordinate quantile for the box coordinate comprises determining a conformal label set depending on the conformal label quantiles, wherein the conformal label set comprises a subset of class labels of the calibration data, and selecting the largest of the conformal box coordinate quantiles over the classes in the conformal label set as the box coordinate quantile for the box coordinate, and
   in that the calibration data comprises the digital images associated with a respective class of a set of classes, wherein the test sample comprises the digital image in particular associated with a class of the set of classes, wherein the method comprises determining, in particular with the object detector, a predicted class for the predicted box coordinate, wherein selecting (210) the conformal box coordinate quantile for the box coordinate comprises determining, depending on the calibration data, for the classes in the set of classes a respective conformal box coordinate quantile that is associated with the respective class, determining, depending on the calibration data, a conformal label set comprising a subset of the classes, and selecting the largest of the conformal box coordinate quantiles that is associated to a class in the subset as the conformal box coordinate quantile for the box coordinate.

2. The method according to claim 1, **characterized in that** determining the conformal label set comprising the subset of the classes comprises determining predicted class labels that are associated with a respective probability that the respective predicted class label labels correctly, determining for the classes in the set of classes, in particular with a probabilistic classifier and a scoring function for the class, a respective conformal label quantile depending on the digital images of the calibration data, and selecting the subset in descending probability order from the predicted class labels such that a coverage according to the conformal label quantile is achieved.

3. The method according to one of the preceding claims, **characterized in that** the method comprises determining (214) that the object detector operates unsafely when the predicted coordinate is outside of the prediction interval.

4. The method according to one of the preceding claims, **characterized in that** the method comprises determining (204), in particular with the object detector, the predicted coordinates of the bounding box, determining (212) the prediction interval for the respective predicted coordinates, and determining (214) that the object detector operates safely when the predicted coordinates are within the prediction interval, or determining that the object detector operates unsafely when the predicted coordinates are outside of the prediction interval.

5. The method according to one of the preceding claims, **characterized in that** the method comprises operating (216) an in particular autonomous vehicle depending on the bounding box coordinate, when it is detected that the object detector operates safely, and otherwise not operating an in particular autonomous vehicle depending on the bounding box coordinate.

6. The method according to one of the claims 1 to 5, **characterized in that** the method comprises operating (216) an in particular autonomous vehicle depending on the bounding box coordinate or depending on the predicted class, when it is detected that the object detector operates safely, and otherwise not operating an in particular autonomous vehicle depending on the bounding box coordinate or depending on the predicted class.

7. A device (100) for determining a prediction interval for a coordinate of a bounding box, in particular for checking whether an object detector operates safely or not, preferably for operating an in particular autonomous vehicle, **characterized in that** the device (100) comprises at least one processor (102) and at least one memory (104), wherein the at least one memory (104) is configured to store instructions that, when executed by the at least one processor (102) cause the device (100) to execute the method according to one of the claims 1 to 6.

8. A computer program, **characterized in that** the computer program comprises computer readable instructions that, when executed by a computer, cause the computer to execute the method according to one of the claims 1 to 6.

9. A data structure (300), in particular a computer implemented data structure, **characterized in that** the data structure (300) comprises at least one data field (302) for calibration data, and for a test sample, wherein the calibration data comprises digital images that are associated with a respective ground truth bounding box coordinate and class label, wherein the test sample comprises a digital image, wherein the data structure comprises at least one data field (302) for a predicted box coordinate, for conformal label quantiles for the respective classes and conformal box coordinate quantiles for the respective box coordinates, for a conformal box coordinate quantile selected from the conformal box coordinate quantiles depending on the conformal label quantiles, and for a conformal box coordinate prediction interval, and

**in that** the data structure (300) according to claim 9, comprises at least one data field (302) for a class associated with a respective digital image of the calibration data, preferably at least one data field (302) for a class associated with the digital image of the test sample, at least one data field (302) for a predicted class for the predicted box coordinate, for a conformal box coordinate quantile that is associated with a respective class of the set of classes, and for a conformal label set comprising a subset of the classes.

```
┌─────────────────────────┐
│   ┌───────────┐         │
│   │    102    │         │
│   │           │         │      ⌐√100
│   └───────────┘         │
│   ┌───────────┐         │
│   │    104    │         │
│   │           │         │
│   └───────────┘         │
│                         │
└─────────────────────────┘
```

**Fig. 1**

```
┌─────────────────────────┐
│           202           │
└─────────────────────────┘
            │
            ▼
┌─────────────────────────┐
│           204           │
└─────────────────────────┘
            │
            ▼
┌ ─ ─ ─ ─ ─ ─ ─ ─ ─ ─ ─ ─ ┐
            206
└ ─ ─ ─ ─ ─ ─ ─ ─ ─ ─ ─ ─ ┘
            │
            ▼
┌ ─ ─ ─ ─ ─ ─ ─ ─ ─ ─ ─ ─ ┐
            208
└ ─ ─ ─ ─ ─ ─ ─ ─ ─ ─ ─ ─ ┘
            │
            ▼
┌─────────────────────────┐
│           210           │
└─────────────────────────┘
            │
            ▼
┌─────────────────────────┐
│           212           │
└─────────────────────────┘
            │
            ▼
┌ ─ ─ ─ ─ ─ ─ ─ ─ ─ ─ ─ ─ ┐
            214
└ ─ ─ ─ ─ ─ ─ ─ ─ ─ ─ ─ ─ ┘
            │
            ▼
┌ ─ ─ ─ ─ ─ ─ ─ ─ ─ ─ ─ ─ ┐
            216
└ ─ ─ ─ ─ ─ ─ ─ ─ ─ ─ ─ ─ ┘
```

**Fig. 2**

Fig. 3

Europäisches
Patentamt

European
Patent Office

Office européen
des brevets

# EUROPEAN SEARCH REPORT

**Application Number**

EP 24 16 0622

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE GRANCEY FLORENCE ET AL: "Object Detection with Probabilistic Guarantees: A Conformal Prediction Approach", 7 September 2022 (2022-09-07), 20220907, PAGE(S) 316 - 329, XP047632615, [retrieved on 2022-09-07] * abstract * * page 316 - page 327 * * figures 1,3 * | 1-11 | INV. G06V10/25 G06V10/98 G06V20/56 |
| A | L\'EO AND\'EOL ET AL: "Conformal Prediction for Trustworthy Detection of Railway Signals", ARXIV.ORG, CORNELL UNIVERSITY LIBRARY, 201 OLIN LIBRARY CORNELL UNIVERSITY ITHACA, NY 14853, 26 January 2023 (2023-01-26), XP091421969, * abstract * * page 1 - page 3 * | 1-11 | |

**TECHNICAL FIELDS SEARCHED (IPC)**

G06V

The present search report has been drawn up for all claims

| Place of search | Date of completion of the search | Examiner |
|---|---|---|
| The Hague | 30 July 2024 | Karwe, Markus |

EPO FORM 1503 03.82 (P04C01)